(19) Europäisches Patentamt
European Patent Office
Office européen des brevets

(11) **EP 2 278 143 B1**

(12) **EUROPEAN PATENT SPECIFICATION**

(45) Date of publication and mention of the grant of the patent:
**06.03.2013 Bulletin 2013/10**

(21) Application number: **10161396.6**

(22) Date of filing: **29.04.2010**

(51) Int Cl.:
*F02D 41/30* (2006.01)     *F02D 41/40* (2006.01)

(54) **Fuel injection control system for internal combustion engine and control method therefor**

Brennstoffeinspritzsteuerungssystem für einen Verbrennungsmotor und Steuerungsverfahren dafür

Système de contrôle d'injection de carburant pour moteur de combustion interne et son procédé de contrôle

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **22.06.2009 JP 2009147396**

(43) Date of publication of application:
**26.01.2011 Bulletin 2011/04**

(73) Proprietor: **Honda Motor Co., Ltd.**
**Tokyo 107-8556 (JP)**

(72) Inventors:
• **Ohnishi, Hiroyuki**
  **Saitama 351-0193 (JP)**
• **Sasaki, Yuji**
  **Saitama 351-0193 (JP)**

(74) Representative: **Prechtel, Jörg**
**Weickmann & Weickmann**
**Patentanwälte**
**Postfach 86 08 20**
**81635 München (DE)**

(56) References cited:
**EP-A2- 2 003 317     US-A1- 2003 070 653**
**US-A1- 2005 092 303**

**Description**

BACKGROUND OF THE INVENTION

Field of the Invention

The present invention relates to a fuel injection control system for an internal combustion engine, according to the preamble part of claim 1 known from EP 2003 317 A2 and a control method therefor according to the preamble part of claim 2 known from EP 2003 317 A2.

Description of the Related Art

Conventionally, there has been proposed a fuel injection control system for an internal combustion engine of this type, for example, in Japanese Laid-Open Patent Publication (Kokai) No. 2005-36788. In the proposed fuel injection control system, in order to control the amount of fuel injected by a fuel injection valve of the engine with high accuracy, a correction amount for correcting a command injection amount for the fuel injection valve is calculated as follows: On such conditions that the pressure of fuel supplied to the fuel injection valve of the engine (hereinafter referred to as the "fuel pressure") is kept at a predetermined value, that the engine is performing a fuel cut operation that interrupts injection of fuel to be performed for obtaining output of the engine, and so forth, the command injection amount is set to a minute amount, whereby a minute amount of fuel is injected (hereinafter referred to as the "single injection"). Further, an actual fuel injection amount is estimated based on an amount of change in the rotational speed of the engine which is detected during execution of such single injection, and the aforementioned correction amount is calculated based on the difference of the estimated fuel injection amount from the command injection amount used for the single injection.

In general, the accuracy of fuel injection amount control is degraded due to the degradation of fuel injection characteristics caused by aging of the fuel injection valve, and hence the above-mentioned calculation of the correction amount needs to be performed somewhat frequently in order to control the fuel injection amount with high accuracy. However, in the above-described conventional fuel injection control system, the calculation of the correction amount is performed on condition that the fuel pressure is kept at a predetermined value, and hence the frequency of execution of the calculation decreases. As a result, there is a fear that it is impossible to control the fuel injection amount with high accuracy.

Further, assuming that the conventional fuel injection control system performs the calculation of the correction amount when the above-mentioned condition related to the fuel pressure is not satisfied, even when the actual fuel injection amount is the same, if the fuel pressure is different, a state of combustion of the injected fuel is different, so that a different amount of change in the rotational speed of the engine is obtained. Therefore, it is impossible to properly calculate the correction amount based on the command injection amount and the fuel injection amount estimated by using the amount of change in the rotational speed, and in turn it is impossible to control the fuel injection amount with high accuracy.

US 2005/009203 also discloses a similar barning process for a fuel injection system.

SUMMARY OF THE INVENTION

It is an object of the present invention to provide a fuel injection control system for an internal combustion engine, which has a prolonged service life and which is capable of properly calculating a correction amount according to a fuel injection pressure, thereby making it possible to control a fuel injection amount with high accuracy, and a control method therefor.

To attain the above object, in a first aspect of the present invention, there is provided a fuel injection control system for an internal combustion engine, according to claim 1.

With the configuration of the fuel injection control system according to the first aspect of the present invention, the minute amount injection that injects a predetermined minute amount of fuel from the fuel injection valve is executed by the minute amount injection means during the fuel cut operation that interrupts injection of fuel for obtaining output of the engine. A change in rotation of the engine during execution of such minute amount injection is detected by the rotation change-detecting means, and a pressure of fuel injected from the fuel injection valve is detected as the fuel injection pressure by the fuel injection pressure-detecting means. Further, the correction amount for correcting the control input for controlling the fuel injection amount injected from the fuel injection valve is calculated by the correction amount calculation means by using the detected change in rotation of the engine and the detected fuel injection pressure, and the control input is corrected by the correction means according to the calculated correction amount.

If the minute amount injection is executed during the fuel cut operation, a change in rotation of the engine is caused by combustion of the injected fuel, and therefore the change in rotation of the engine detected during execution of the minute amount injection becomes equal to a magnitude that is commensurate with a minute amount of fuel when the minute amount of fuel is actually injected from the fuel injection valve. Therefore, according to the above-described configuration, it is possible to properly calculate the correction amount by using the change in rotation of the engine. Further, since the calculation of the correction amount is performed by using the fuel injection pressure in addition to the change in rotation, it is possible to properly calculate the correction amount according to the fuel injection pressure while compensating for the above-mentioned actual change in rotation caused by the fuel injection pressure. Therefore, it is possible to properly correct the aforementioned control input by using the correction amount thus properly calculated, and in turn it is possible to control the fuel injection amount with high accuracy.

The change in rotation of the engine that is caused by combustion of fuel in the combustion chamber is larger as the amount of combusted fuel is larger. Further, as the temperature of intake air drawn into the engine is lower, fuel becomes more difficult to combust. Therefore, even when the fuel injection amount that is actually injected from the fuel injection valve is a minute amount, the change in rotation detected by the above-mentioned rotation change-detecting means becomes smaller than the magnitude that is commensurate with the minute amount. As a result, the fuel injection amount is evaluated as if it were smaller than an actual value. For this reason, if the correction amount is calculated by using the change in rotation and the fuel injection pressure without using the temperature of intake air, the fuel injection amount based on the control input corrected by the correction amount becomes larger as the temperature of intake air is lower.

However, with the above-described configuration the temperature of intake air is detected as the intake temperature by the intake temperature-detecting means, and the correction amount is calculated such that the fuel injection amount based on the control input corrected by the correction amount becomes smaller as the detected intake temperature is lower. Accordingly, it is possible to properly calculate the correction amount according to the intake temperature while compensating for a change in the actual change in rotation caused by the intake temperature, thereby making it possible to control the fuel injection amount with higher accuracy.

To attain the above object, in a second aspect of the present invention, there is provided a control method for a fuel injection control system for an internal combustion engine according to claim 2.

With the configuration of the control method according to the second aspect of the present invention, it is possible to obtain the same advantageous effects as provided by the first aspect of the present invention.

The above and other objects, features, and advantages of the present invention will become more apparent from the following detailed description taken in conjunction with the accompanying drawings.

BRIEF DESCRIPTION OF THE DRAWINGS

FIG. 1 is a schematic diagram of a fuel injection control system according to a present embodiment and an internal combustion engine to which is applied the fuel injection control system;
FIG. 2 is a block diagram showing an ECU and other components of the fuel injection control system according to the present embodiment;
FIG. 3 is a flowchart of a precondition determining process;
FIG. 4 is a flowchart of an execution condition determining process;
FIG. 5 is a flowchart of a fuel pressure control process which is a subroutine executed in FIG. 4;
FIG. 6 is an example of a map for calculating a judgment temperature used in the process of FIG. 5;
FIG. 7 is a flowchart of a learned value calculation process;
FIG. 8 is a flowchart of a continuation of FIG. 7;
FIG. 9 is an example of a map for calculating a fuel pressure correction coefficient used in the process of FIG. 7;
FIG. 10 is an example of a map for calculating an intake temperature correction coefficient used in the process of FIG. 7; and
FIG. 11 is a flowchart of a fuel injection amount control process.

DETAILED DESCRIPTION OF PREFERRED EMBODIMENTS

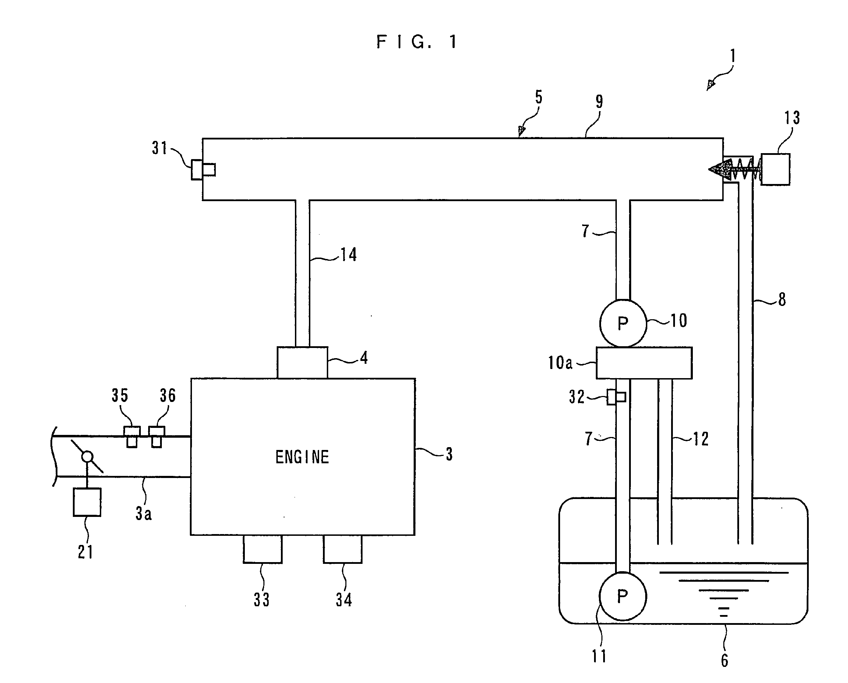

The invention will now be described in detail with reference to drawings showing a preferred embodiment thereof. FIG. 1 schematically shows a fuel injection control system 1 according to the present embodiment, together with an internal combustion engine 3 to which the fuel injection control system 1 is applied. The internal combustion engine 3 (hereinafter referred to as the "engine 3") is an in-line four-cylinder diesel engine installed on a vehicle (not shown).

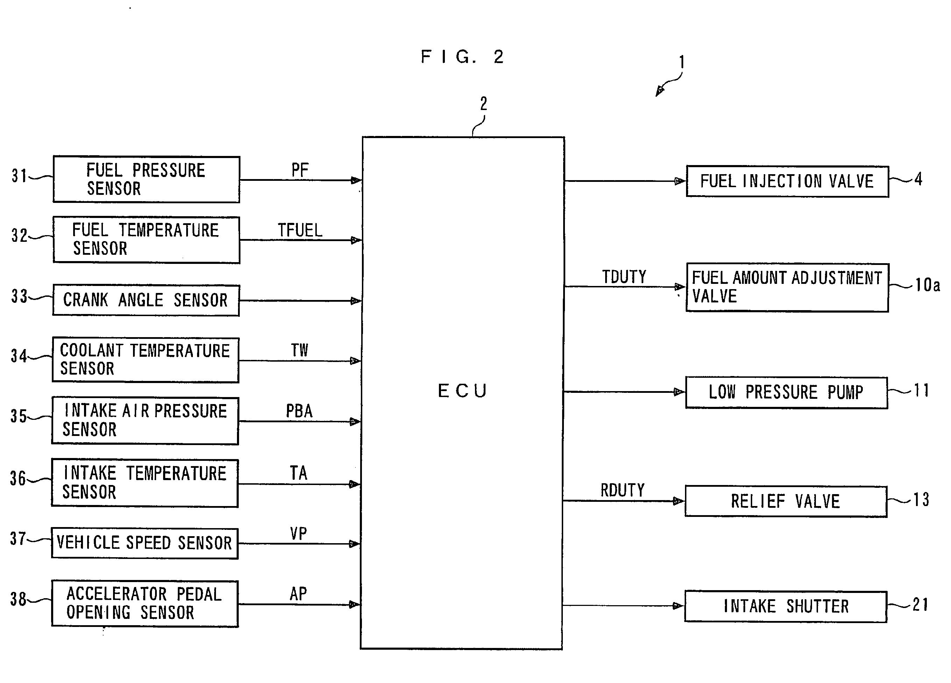

The fuel injection control system 1 includes fuel injection valves 4 (only one of which is shown) provided for respective cylinders, not shown, a fuel supply mechanism 5 for supplying fuel to the fuel injection valves 4, and an ECU 2 for controlling the operation of the fuel injection valves 4 and the fuel supply mechanism 5 (see FIG. 2).

Each fuel injection valve 4 is connected to the fuel supply mechanism 5 and injects fuel supplied from the fuel supply mechanism 5 into an associated one of the cylinders. The valve-opening time period of each fuel injection valve 4 is controlled by a control input, described hereinafter, from the ECU 2, whereby a fuel injection amount of fuel injected from the fuel injection valve 4 is controlled.

The fuel supply mechanism 5 includes a fuel tank 6 that stores fuel, a common-rail injection system 9 that is connected to the fuel tank 6 via a first feed hose 7 and a first return hose 8 and stores fuel under high pressure, and a high pressure pump 10 that is disposed in an intermediate portion of the first feed hose 7.

In the fuel tank 6, a low pressure pump 11 is disposed. The low pressure pump 11 is an electric pump controlled by the ECU 2, and during operation of the engine 3, is always in operation to increase the pressure of fuel in the fuel tank 6 up to a predetermined pressure and thereby pump the same into the high pressure pump 10 via the first feed hose 7.

The high pressure pump 10 is provided with a fuel amount adjustment valve 10a. The fuel amount adjustment valve 10a, which is a combination of a solenoid and a spool valve mechanism, adjusts the amount of fuel supplied from the low pressure pump 11 to the high pressure pump 10, and returns unnecessary fuel to the fuel tank 6 via a second return hose 12. The amount of fuel supplied to the high pressure pump 10 and the amount of fuel returned to the fuel tank 6 are changed by controlling the duty ratio TDUTY of electric current supplied to the fuel amount adjustment valve 10a (hereinafter referred to as the "amount adjustment valve duty ratio TDUTY"), by the ECU 2.

The high pressure pump 10 is a positive-displacement pump coupled to a crankshaft (not shown) of the engine 3, and is driven by the crankshaft, whereby the high pressure pump 10 further increases the pressure of fuel supplied from the fuel amount adjustment valve 10a and pumps the same into the common-rail injection system 9.

Further, a connecting portion of the common-rail injection system 9 with the first return hose 8 is provided with a relief valve 13. The relief valve 13 is comprised of a normally-open electromagnetic valve, and the valve opening degree thereof is linearly changed by controlling the duty ratio RDUTY of supplied electric current (hereinafter referred to as the "relief valve duty ratio RDUTY"), by the ECU 2, whereby the amount of fuel returned from the common-rail injection system 9 to the fuel tank 6 is controlled.

In the fuel supply mechanism 5 constructed as described above, the amount of fuel flowing into the common-rail injection system 9 is controlled by the amount adjustment valve duty ratio TDUTY, and at the same time, the amount of fuel flowing out of the common-rail injection system 9 is controlled by the relief valve duty ratio RDUTY, whereby the pressure of fuel in the common-rail injection system 9 (hereinafter referred to as the "fuel pressure") is controlled. This causes the common-rail injection system 9 to store therein fuel at high pressure. Fuel in the common-rail injection system 9 is supplied to each fuel injection valve 4 via a second feed hose 14.

Further, the common-rail injection system 9 has a fuel pressure sensor 31 attached thereto. The fuel pressure sensor 31 detects the fuel pressure (the pressure of fuel in the common-rail injection system 9) PF and delivers a detection signal indicative of the detected fuel pressure PF to the ECU 2. Since fuel in the common-rail injection system 9 is supplied to each fuel injection valve 4 as mentioned above, the detected fuel pressure PF is equal to the pressure of fuel injected from the fuel injection valve 4. Further, the first feed hose 7 is provided with a fuel temperature sensor 32 in the vicinity of the fuel amount adjustment valve 10a. The fuel temperature sensor 32 detects the temperature TFUEL of fuel in the vicinity of the fuel amount adjustment valve 10a (hereinafter referred to as the "fuel temperature TFUEL") and delivers a detection signal indicative of the detected fuel temperature TFUEL to the ECU 2.

Further, the engine 3 is provided with a crank angle sensor 33 comprised of a magnet rotor and an MRE (Magnetic Resistance Element) pickup. The crank angle sensor 33 delivers a CRK signal, a TDC signal, and a CYL signal, each of which is a pulse signal, to the ECU 2 in accordance with rotation of the crankshaft of the engine 3. The CRK signal is delivered whenever the crankshaft rotates through a predetermined crank angle (e.g. 6° ). The ECU 2 calculates the rotational speed NE of the engine 3 (hereinafter referred to as the "engine speed NE") based on the CRK signal. Further, the TDC signal indicates that a piston (not shown) of one of the cylinders of the engine 3 is in a predetermined crank angle position slightly before the TDC position of the intake stroke. In the present embodiment, since the engine 3 has four cylinders, the TDC signal is delivered whenever the crankshaft rotates through 180° . Also, the CYL signal indicates that a piston of a particular cylinder is in the predetermined crank angle position. Based on the CYL signal, the ECU 2 determines a cylinder in the compression stroke.

Further, the engine 3 is provided with a coolant temperature sensor 34, which detects the temperature TW of engine coolant for cooling the engine 3 (hereinafter referred to as the "engine coolant temperature TW") and delivers a detection signal indicative of the detected engine coolant temperature TW to the ECU 2.

Further, an intake passage 3a of the engine 3 is provided with an intake shutter 21, the opening degree of which is controlled by the ECU 2, whereby an intake air amount drawn into the engine 3 is controlled. Also, the intake passage 3a is provided with an intake air pressure sensor 35 and an intake temperature sensor 36 at respective locations downstream of the intake shutter 21. The intake air pressure sensor 35 detects pressure PBA in the intake passage 3a (hereinafter referred to as the "intake pressure PBA") as the absolute pressure and delivers a detection signal indicative of the detected intake pressure PBA to the ECU 2. The intake temperature sensor 36 detects the temperature TA of intake air (hereinafter referred to as the "intake temperature TA") and delivers a detection signal indicative of the detected intake temperature TA to the ECU 2.

Further, delivered to the ECU 2 are a detection signal indicative of a vehicle speed VP from a vehicle speed sensor 37, and a detection signal indicative of an operation amount AP of an accelerator pedal (not shown) of the vehicle (hereinafter referred to as the "accelerator pedal opening AP") from an accelerator pedal opening sensor 38.

The ECU 2 is implemented by a microcomputer comprising an I/O interface, a CPU, a RAM, a ROM, and the like. In response to the detection signals from the above-described various types of sensors 31 to 38, the ECU 2 determines operating conditions of the engine 3 in accordance with e.g. a control program stored in the ROM, and executes engine control including control of the fuel injection amount of each fuel injection valve 4 depending on the determined operating conditions of the engine 3.

Now, a description will be given of various types of processes executed by the ECU 2. More specifically, the ECU 2 executes a learned value calculation process for calculating a learned value QCLRN. The learned value QCLRN is calculated for the following purpose: Fuel injection characteristics of the fuel injection valve 4 change over time due to aging thereof, and hence even if an identical control input is supplied to the fuel injection valve 4, an actual fuel injection amount gradually changes (normally decreases). The learned value QCLRN is for controlling the fuel injection amount with high accuracy by compensating for such a change in the fuel injection amount.

Further, in the learned value calculation process, a change of rotation of the engine 3 is detected which is caused by combustion of fuel injected by minute amount injection, and the above-mentioned learned value QCLRN is calculated using the detected change of rotation of the engine 3 and the fuel pressure PF detected during execution of the minute amount injection. The minute amount injection is to inject a predetermined minute amount of fuel during a fuel cut (hereinafter referred to as the "F/C") operation that interrupts fuel injection performed for obtaining engine output from the engine 3.

As for the calculation of the learned value QCLRN, if the fuel pressure PF is different, the fuel injection characteristics of the fuel injection valve 4 are different, so that a different fuel injection amount is obtained with respect to the same control input. Therefore, the calculation of the learned value QCLRN is performed with respect to each of a plurality of predetermined pressures concerning the fuel pressure PF. For this reason, the minute amount injection is performed in a state where the fuel pressure PF is controlled to one of the plurality of predetermined pressures, and is performed with respect to each of the plurality of predetermined pressures. Further, since the fuel injection valve 4 is provided for each cylinder of the engine 3, the calculation of the learned value QCLRN is performed on a cylinder-by-cylinder basis.

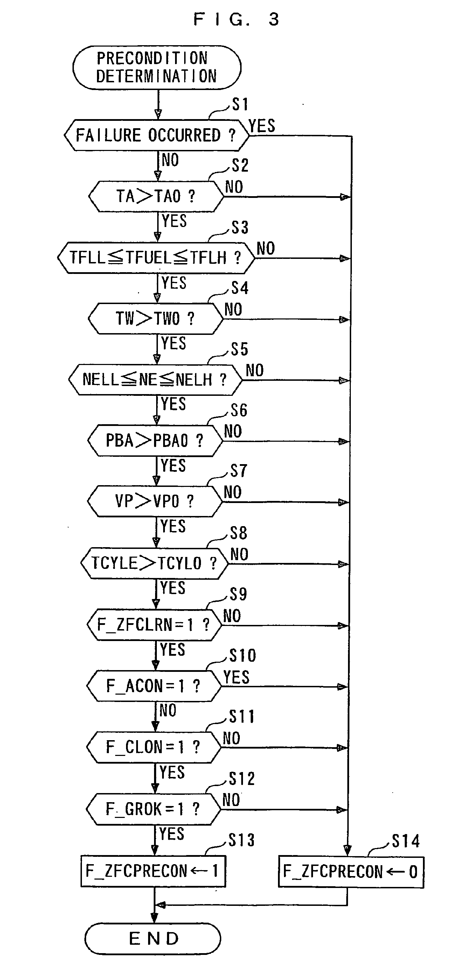

In order to properly perform the calculation of the above-mentioned learned value QCLRN, the learned value calculation process is executed when predetermined execution conditions concerning the operating conditions of the engine 3 and the fuel pressure PF are satisfied. FIGS. 3 to 5 show processes for determining whether or not such execution conditions are satisfied. First, a description will be given of a precondition determining process shown in FIG. 3. This process is repeatedly executed at a predetermined period (e.g. 100 msec).

In a step 1 (shown as "S1" in abbreviated form in FIG. 3; the following steps are also shown in abbreviated form) to a step 3 appearing in FIG. 3, it is respectively determined whether or not it has been determined by a failure determining process (not shown) that some failure has occurred in the fuel injection control system 1 and the engine 3, whether or not the detected intake temperature TA is higher than a predetermined temperature TA0 (e. g. 5°C), and whether or not the detected fuel temperature TFUEL is within a range between predetermined upper and lower limit temperatures TFLH and TFLL (e.g. 120°C and 10°C, respectively). In the following steps 4 to 6, it is respectively determined whether or not the detected engine coolant temperature TW is higher than a predetermined engine coolant temperature TW0 (e.g. 70°C), whether or not the calculated engine speed NE is within a range between predetermined upper and lower limit rotational speeds NELH and NELL (e.g. 3,000 rpm and 1,000 rpm, respectively), and whether or not the detected intake pressure PBA is higher than a predetermined intake pressure PBAO (e.g. 800 hPa).

In the following steps 7 to 9, it is respectively determined whether or not the detected vehicle speed VP is higher than a predetermined vehicle speed VP0 (e. g. 30 km/h), whether or not an estimated combustion chamber temperature TCYLE is higher than a predetermined temperature TCYL0 (e. g. 200°C), and whether or not a learning request flag F_ZFCLRN, which is set to 1 when an update of the learned value QCLRN is determined to be necessary, is 1. In the following steps 10 to 12, it is respectively determined whether or not an air-conditioning flag F_ACON, which is set to 1 when an air-conditioning device using the engine 3 as a power source is being operated, is 1, whether or not a clutch flag F_CLON, which is set to 1 when a clutch that engages and disengages between the engine 3 and drive wheels of the vehicle is in an engaging state, is 1, and whether or not a gear range flag F_GROK, which is set to 1 when the position of a gear of a transmission of the vehicle that is coupled to the engine 3 is in a predetermined range, is 1.

If the answers to the questions of the above-described steps 2 to 9, 11, and 12 are all affirmative (YES), and at the same time, the answers to the questions of the steps 1 and 10 are both negative (NO), it is determined that the predetermined preconditions are satisfied and in order to indicate the fact, a precondition satisfied flag F_ZFCPRECON is set to 1 (step 13), followed by terminating the present process. On the other hand, when any of the answers to the questions of the steps 2 to 9, 11, and 12 is negative (NO), or one of the answers to the questions of the steps 1 and 10 is affirmative (YES), it is determined that the preconditions are not satisfied, and the precondition satisfied flag F_ZFCPRECON is set to 0 (step 14), followed by terminating the present process.

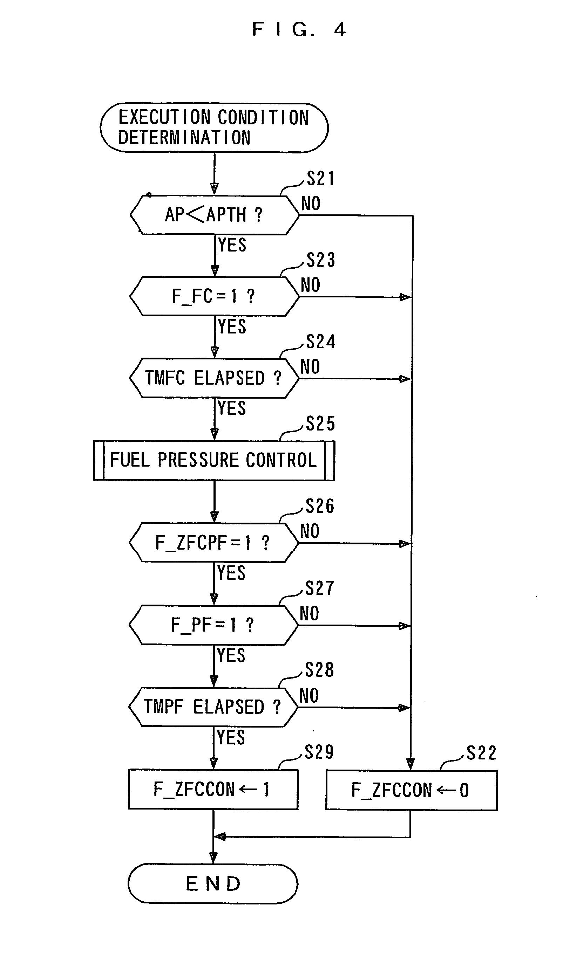

Next, a description will be given of an execution condition determining process with reference to FIG. 4. As described hereinabove, the calculation of the learned value QCLRN is performed during execution of the minute amount injection, which injects fuel in the state where the fuel pressure PF is controlled to one of the plurality of predetermined pressures during the F/C operation. Therefore, in the execution condition determining process, it is determined whether or not both of execution conditions associated with the F/C operation and the fuel pressure PF are satisfied. Also, similarly to the above-described precondition determining process, the present process is repeatedly executed at a predetermined period.

First, in a step 21 in FIG. 4, it is determined whether or not the detected accelerator pedal opening AP is smaller than a predetermined opening APTH. If the answer to this question is negative (NO), i.e. if the accelerator pedal is operated, it is determined that the execution conditions are not satisfied, and in order to indicate the fact, an execution condition satisfied flag F_ZFCCON is set to 0 (step 22), followed by terminating the present process. On the other hand, if the answer to the question of the step 21 is affirmative (YES), it is determined whether or not an F/C flag F_FC is 1 (step 23). The F/C flag F_FC is set to 1 during the F/C operation.

If the answer to the question of the step 23 is negative (NO), i.e. if it is not during the F/C operation, the step 22 is executed, followed by terminating the present process, whereas if the answer is affirmative (YES), i.e. if it is during the F/C operation, it is determined whether or not a predetermined time period TMFC (e.g. 1 sec.) has elapsed from the start of the F/C operation (step 24). If the answer to this question is negative (NO), it is not long enough after the start of the F/C operation, and there is a fear that the calculation of the learned value QCLRN based on the change of rotation of the engine 3 cannot be properly performed. Therefore, it is determined that the execution conditions are not satisfied, and the step 22 is executed, followed by terminating the present process.

On the other hand, if the answer to the question of the step 24 is affirmative (YES), it is determined that the execution conditions associated with the F/C operation are satisfied, and in the following step 25 et seq., the control of the fuel pressure PF for the minute amount injection (hereinafter referred to as the "fuel pressure control for the minute amount injection") is performed, and it is determined whether or not the execution conditions associated with the fuel pressure PF are satisfied.

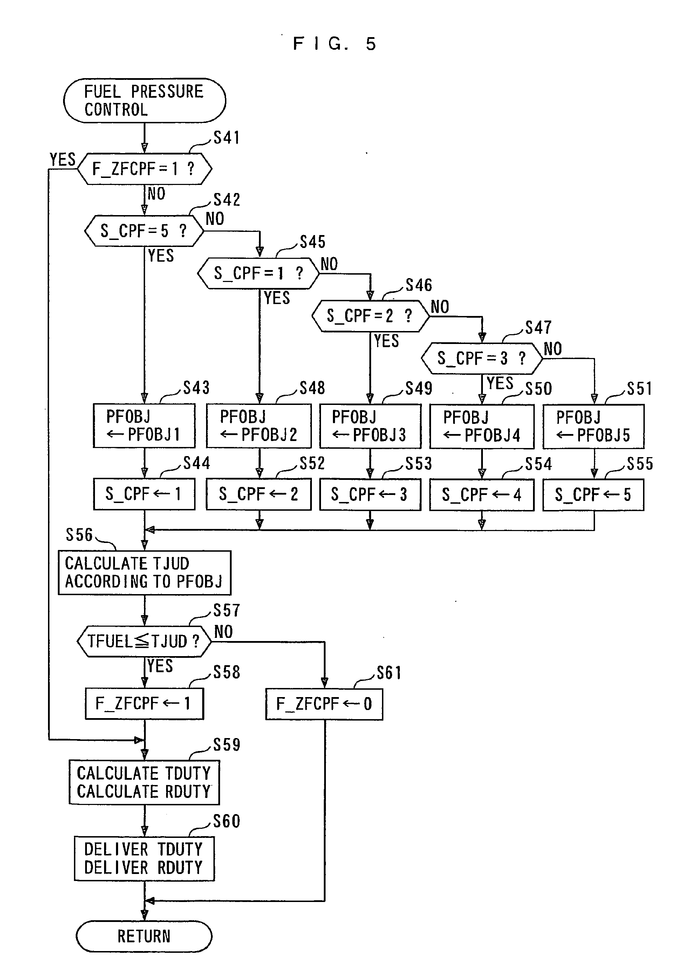

First, in the step 25, a fuel pressure control process is executed. The fuel pressure control process is for performing the aforementioned fuel pressure control for the minute amount injection. FIG. 5 shows the present process which is a subroutine of the execution condition determining process in FIG. 4.

First, a description will be given of the outline of the fuel pressure control process. In the present process, in order to calculate the learned value QCLRN, the fuel pressure PF is controlled to one of first to fifth target fuel pressures PFOBJ1 to PFOBJ5, which are the plurality of predetermined pressures, to thereby execute the fuel pressure control for the minute amount injection. In this case, in order to calculate the learned value QCLRN with respect to each of the first to fifth target fuel pressures PFOBJ1 to PFOBJ5 as described above, each time the learned value QCLRN is calculated for all of the cylinders, a target fuel pressure PFOBJ, which is a target value of the fuel pressure PF, is sequentially changed to the first to fifth target fuel pressures PFOBJ1 to PFOBJ5.

It should be noted that the first to fifth target fuel pressures PFOBJ1 to PFOBJ5 are set to respective pressures that become lower in the mentioned order, with the first and fifth target fuel pressures PFOBJ1 and PFOBJ5 set to the maximum value and the minimum value which can be taken during operation of the engine 3, e.g. 150 MPa and 23 MPa, respectively, of the fuel pressure PF. Also, the second, third, and fourth target fuel pressures PFOBJ2, PFOBJ3, and PFOBJ4 are set to e.g. 100 MPa, 80 MPa, and 40 MPa, respectively. The number of predetermined pressures is not limited to five as in the present embodiment, but may be any desired number insofar as it is plural.

Further, in the fuel pressure control process, in preparation for execution of the fuel pressure control for the minute amount injection, in order to avoid a situation where overheated fuel flows into the first return hose 8 and protect the first return hose 8, it is determined based on a relationship between the target fuel pressure PFOBJ and the fuel temperature TFUEL whether or not the fuel pressure control for the minute amount injection using the target fuel pressure PFOBJ is executable. When the execution of the fuel pressure control for the minute amount injection is inhibited, the target fuel pressure PFOBJ is changed to a lower one of the first to fifth target fuel pressures PFOBJ1 to PFOBJ5.

First, in a step 41 appearing in FIG. 5, it is determined whether or not a fuel pressure control flag F_ZFCPF is 1. The fuel pressure control flag F_ZFCPF is set to 1 during execution of the fuel pressure control for the minute amount injection, and is reset to 0 at the start of the F/C operation or when the calculation of the learned value QCLRN with respect to the present target fuel pressure PFOBJ is completed for all of the cylinders, as described hereinafter. If the answer to the question of the step 41 is negative (NO), i. e. if the fuel pressure control for the minute amount injection is not being executed, it is determined whether or not a fuel pressure status S_CPF obtained at the time is 5 (step 42).

The fuel pressure status S_CPF indicates a setting state of the present target fuel pressure PFOBJ. More specifically, when the target fuel pressure PFOBJ is set to the first to fifth target fuel pressures PFOBJ1 to PFOBJ5, the fuel pressure status S_CPF is set to 1 to 5, respectively. Also, the fuel pressure status S_CPF is reset to 5 at the start of the engine 3.

If the answer to the question of the step 42 is affirmative (YES), i.e. if S_CPF = 5 holds, that is, if this time is a first loop after the start of the engine 3, or if the present target fuel pressure PFOBJ is the fifth target fuel pressure PFOBJ5, the target fuel pressure PFOBJ is set or changed to the first target fuel pressure PFOBJ1 (step 43), and the fuel pressure status S_CPF is set to 1 (step 44).

On the other hand, if the answer to the question of the step 42 is negative (NO), the process proceeds to a step 45. In the step 45 and steps 46 and 47, similarly to the step 42, it is determined whether or not the fuel pressure status S_CPF at the time is 1 to 3, respectively, and depending on a result of the determination, the target fuel pressure PFOBJ and the fuel pressure status S_CPF are set in steps 48 to 55. As a consequence, when the present target fuel pressure PFOBJ is one of the first to third target fuel pressures PFOBJ1 to PFOBJ3, the target fuel pressure PFOBJ is set or changed to a corresponding one of the second to fourth target fuel pressures PFOBJ2 to PFOBJ4 and the fuel pressure status S_CPF is set to a corresponding one of 2 to 4.

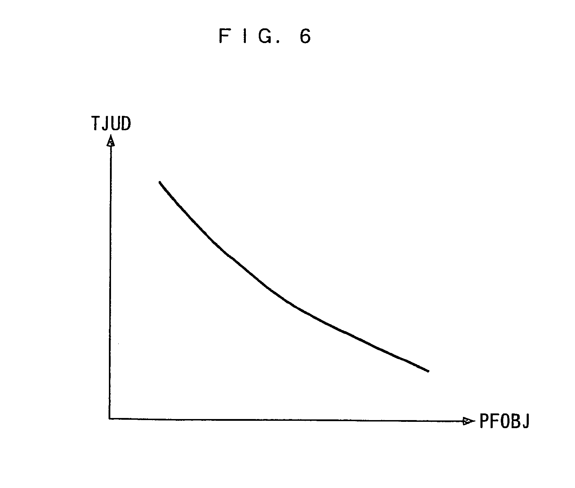

Further, in a step 56 following one of the above-described steps 44 and 52 to 55, a judgment temperature TJUD is calculated by searching a predetermined map shown in FIG. 6 according to the target fuel pressure PFOBJ set in one of the steps 43 and 48 to 51. The judgment temperature TJUD is compared with the fuel temperature TFUEL to thereby determine whether or not the fuel pressure control for the minute amount injection using the target fuel pressure PFOBJ is executable. In the aforementioned map, the judgment temperature TJUD is set to a lower value as the target fuel pressure PFOBJ is higher so as to avoid the situation where overheated fuel flows into the first return hose 8 as the fuel pressure control for the minute amount injection is executed.

In a step 57 following the step 56, it is determined whether or not the fuel temperature TFUEL is equal to or lower than the judgment temperature TJUD calculated in the step 56. If the answer to this question is affirmative (YES), the fuel pressure control flag F_ZFCPF is set to 1 (step 58) in order to execute the fuel pressure control for the minute amount injection using the target fuel pressure PFOBJ, and then the process proceeds to a step 59. By executing the step 58, the answer to the question of the above-mentioned step 41 becomes affirmative (YES) in the following loops. In this case, the above-described steps 42 to 58 are skipped, whereby the process directly proceeds to the step 59.

In the step 59, the above-mentioned amount adjustment valve duty ratio TDUTY and relief valve duty ratio RDUTY are calculated with a predetermined feedback control algorithm according to the difference between the target fuel pressure PFOBJ and the fuel pressure PF, and respective electric currents based on the calculated duty ratios TDUTY and RDUTY are supplied to the fuel amount adjustment valve 10a and the relief valve 13 (step 60), followed by terminating the present process. By executing these steps 59 and 60, the fuel pressure PF is feedback-controlled to the target fuel pressure PFOBJ.

As described above, in the fuel pressure control process, when the calculation of the learned value QCLRN with respect to the present target fuel pressure PFOBJ is completed for all of the cylinders, the fuel pressure control flag F_ZFCPF is reset to 0, whereby the fuel pressure control for the minute amount injection for calculating the learned value QCLRN with respect to the present target fuel pressure PFOBJ is completed. Further, once the setting of the target fuel pressure PFOBJ and the fuel pressure status S_CPF is executed by the above-mentioned steps 42 to 55, the step 41 prevents the setting from being executed again, until the fuel pressure control for the minute amount injection for calculating the learned value QCLRN with respect to the present target fuel pressure PFOBJ is completed.

With this configuration, the setting or change of the target fuel pressure PFOBJ and the fuel pressure status S_CPF in the fuel pressure control process is made each time the learned value QCLRN is calculated for all of the cylinders. In this case, the target fuel pressure PFOBJ used for the fuel pressure control for the minute amount injection is set or changed to one of the first to fifth target fuel pressures PFOBJ1 to PFOBJ5 in the descending order of the pressures.

On the other hand, if the answer to the question of the above-described step 57 is negative (NO), i.e. if TFUEL > TJUD holds, it is determined that the execution of the fuel pressure control for the minute amount injection using the target fuel pressure PFOBJ corresponding to the judgment temperature TJUD should be inhibited because if the fuel pressure control is executed, there is a fear that overheated fuel flows into the first return hose 8 along with the execution of the fuel pressure control. Accordingly, in order to inhibit the fuel pressure control for the minute amount injection using the target fuel pressure PFOBJ, the fuel pressure control flag F_ZFCPF is set to 0 (step 61), and the present process is immediately terminated without executing the steps 59 and 60.

As described above, in the fuel pressure control process, only when the fuel temperature TFUEL is higher than the judgment temperature TJUD calculated according to the target fuel pressure PFOBJ, the answer to the question of the step 57 becomes negative (NO), and the fuel pressure control flag F_ZFCPF is set to 0 by executing the step 61, thereby inhibiting the fuel pressure control for the minute amount injection using the target fuel pressure PFOBJ. Further, since the fuel pressure control flag F_ZFCPF is set to 0, the answer to the question of the step 41 (F_ZFCPF = 1?) becomes negative (NO). As a result, the setting or change of the target fuel pressure PFOBJ and the fuel pressure status S_CPF is made by the above-described steps 42 to 55.

With the above configuration, until the fuel pressure control for the minute amount injection is permitted, the target fuel pressure PFOBJ is sequentially changed to a lower one of the first to fifth target fuel pressures PFOBJ1 to PFOBJ5. As a result, the target fuel pressure PFOBJ is changed to one of the first to fifth target fuel pressures PFOBJ1 to PFOBJ5 that is lower than the target fuel pressure PFOBJ set when the fuel pressure control for the minute amount injection is inhibited. In this case, as is clear from the setting method according to the target fuel pressure PFOBJ described above, the judgment temperature TJUD is set to the highest temperature when the target fuel pressure PFOBJ is set to the fifth target fuel pressure PFOBJ5 which is the lowest. In doing this, the judgment temperature TJUD is set such that the fuel temperature TFUEL is always equal to or lower than the judgment temperature TJUD, whereby the fuel pressure control for the minute amount injection using at least the fifth target fuel pressure PFOBJ5 is permitted. In other words, when the target fuel pressure PFOBJ is set to the fifth target fuel pressure PFOBJ5, the fuel pressure control for the minute amount injection is not prohibited.

Referring again to FIG. 4, in a step 26 following the above-described step 25, it is determined whether or not the fuel pressure control flag F_ZFCPF set in the step 58 or 61 appearing in FIG. 5 is 1. If the answer to this question is negative (NO), i.e. if the fuel pressure control for the minute amount injection is not being executed, it is determined that the execution conditions are not satisfied, and the process proceeds to the step 22, wherein the execution condition satisfied flag F_ZFCCON is set to 0, followed by terminating the present process.

On the other hand, if the answer to the question of the step 26 is affirmative (YES), i.e. if the fuel pressure control for the minute amount injection is being executed, it is determined whether or not a fuel pressure flag F_PF is 1 (step 27). The fuel pressure flag F_PF is set to 1 when the fuel pressure PF has converged to the target fuel pressure PFOBJ. If the answer to this question is negative (NO), the fuel pressure PF has not converged to the target fuel pressure PFOBJ and hence there is a fear that the learned value QCLRN cannot be properly calculated. Therefore, it is determined that the execution conditions are not satisfied, and the step 22 is executed, followed by terminating the present process.

On the other hand, if the answer to the question of the step 27 is affirmative (YES), it is determined whether or not a predetermined time period TMPF (e.g. 1 sec.) has elapsed since the fuel pressure flag F_PF was set to 1 (step 28). If the answer to this question is negative (NO), it is considered that the fuel pressure PF is not in a state stably converged to the target fuel pressure PFOBJ, and hence it can occur that the learned value QCLRN is not properly calculated. Therefore, it is determined that the execution conditions are not satisfied, and the step 22 is executed, followed by terminating the present process.

On the other hand, if the answer to the question of the above-described step 28 is affirmative (YES), it is determined that both of the execution conditions associated with the F/C operation and the fuel pressure PF are satisfied, and in order to indicate the fact, the execution condition satisfied flag F_ZFCCON is set to 1 (step 29), followed by terminating the present process.

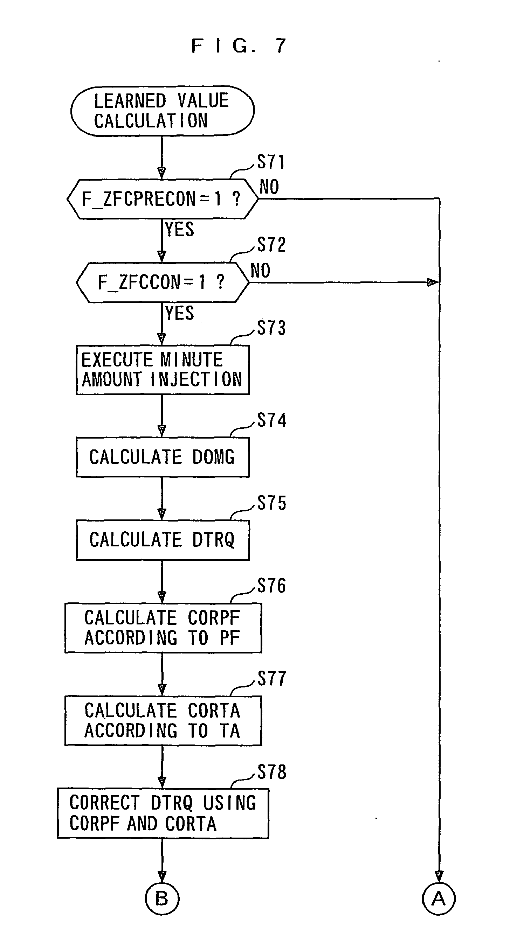

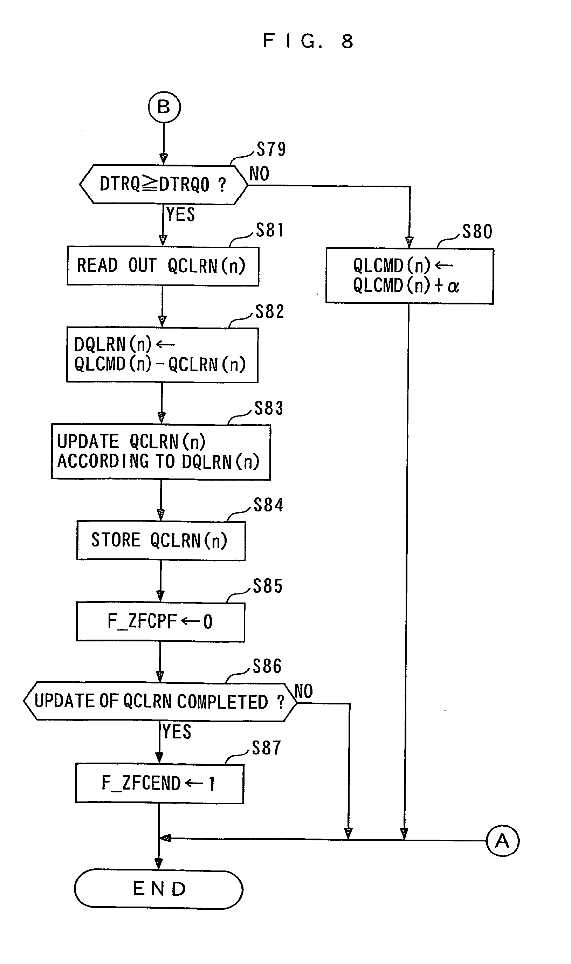

Next, a description will be given of the aforementioned learned value calculation process with reference to FIGS. 7 and 8. In the present process, as mentioned hereinabove, a learned value QCLRN(n) is calculated with respect to each of the first to fifth target fuel pressures PFOBJ1 to PFOBJ5, and is calculated on a cylinder-by-cylinder basis. Here, the suffix n is a parameter for identifying each cylinder. In the present embodiment, since the engine 3 is a four-cylinder type, the suffix n is set to one of values 1 to 4. Also, calculated learned values QCLRN(n) are stored in the RAM of the ECU 2 in association with the cylinders and the fuel pressure statuses S_CPF.

Also, the present process is executed when the piston of a desired cylinder is in the predetermined crank angle position in the compression stroke, to thereby calculate the learned value QCLRN(n) with respect to the cylinder. Hereinafter, a cylinder as a target of the calculation of the learned value QCLRN (n) is referred to as the "learning target cylinder".

First, in a step 71 appearing in FIG. 7, it is determined whether or not the precondition satisfied flag F_ZFCPRECON set in the step 13 or 14 appearing in FIG. 3 is 1, and in a step 72, it is determined whether or not the execution condition satisfied flag F_ZFCCON set in the step 22 or 29 appearing in FIG. 4 is 1. If one of the answers to the respective questions of the steps 71 and 72 is negative (NO), i.e. if the above-described preconditions are not satisfied, or if both of the above-described execution conditions associated with the F/C operation and the fuel pressure PF are not satisfied, the present process is immediately terminated without calculating the learned value QCLRN.

On the other hand, if both of the answers to the respective questions of the steps 71 and 72 are affirmative (YES), i.e. if the preconditions and the execution conditions associated with the F/C operation and the fuel pressure PF are all satisfied, the minute amount injection is executed in the learning target cylinder (step 73). More specifically, by delivering a control input based on a minute command fuel injection amount QLCMD (n) to a fuel injection valve 4 associated with the learning target cylinder, fuel is caused to be injected from the fuel injection valve 4.

Next, based on an instantaneous rotational speed, a rotational speed increase amount DOMG caused by the minute amount injection is calculated (step 74). The instantaneous rotational speed is calculated in another process by using a generation time interval of the CRK signal, and the engine speed NE corresponds to a moving average value of the instantaneous rotational speed. Next, a torque increase amount DTRQ is calculated according to the rotational speed increase amount DOMG calculated in the step 74 and the engine speed NE (step 75).

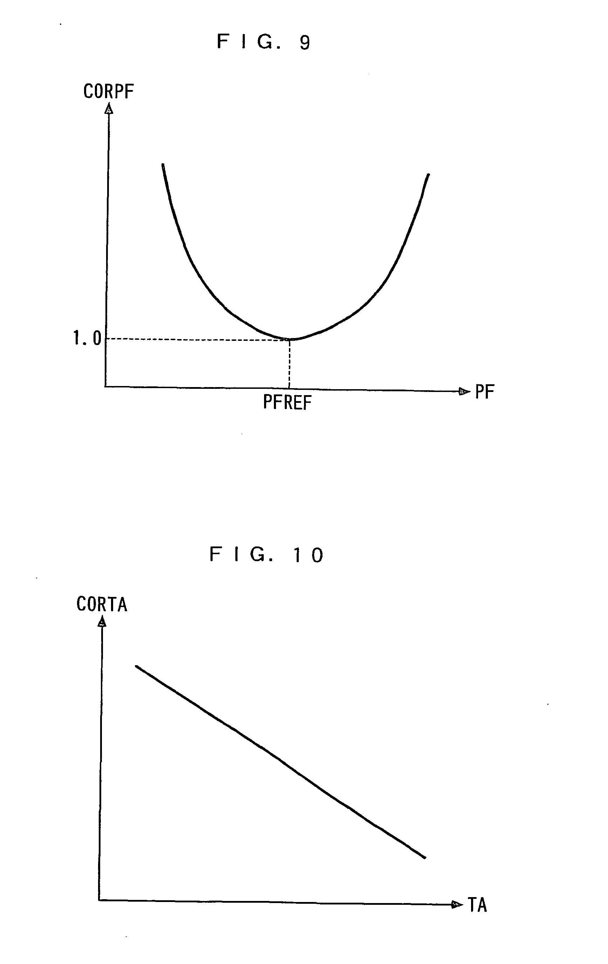

Next, a fuel pressure correction coefficient CORPF is calculated by searching a predetermined map shown in FIG. 9 according to the fuel pressure PF (step 76). In the map, for a reason described hereinafter, the fuel pressure correction coefficient CORPF is set to a value of 1.0 when the fuel pressure PF is a predetermined value PFREF, to a larger value as the fuel pressure PF becomes lower within a range where the fuel pressure PF < the predetermined value PFREF holds, and to a larger value as the fuel pressure PF is higher within a range where the fuel pressure PF > the predetermined value PFREF holds.

Next, an intake temperature correction coefficient CORTA is calculated by searching a predetermined map shown in FIG. 10 according to the intake temperature TA (step 77) . In the map, for a reason described hereinafter, the intake temperature correction coefficient CORTA is set to a smaller value as the intake temperature TA is higher.

Next, by using the fuel pressure correction coefficient CORPF and the intake temperature correction coefficient CORTA calculated in the respective steps 76 and 77, the torque increase amount DTRQ calculated in the step 75 is corrected (step 78). More specifically, a value obtained by multiplying the torque increase amount DTRQ by both of the correction coefficients CORPF and CORTA is set as the torque increase amount DTRQ.

Next, it is determined whether or not the torque increase amount DTRQ corrected in the step 78 is equal to or more than a predetermined increase amount DTRQ0 (step 79). The predetermined increase amount DTRQ0 is for determining whether or not the fuel injection valve 4 is aged. More specifically, the predetermined increase amount DTRQ0 corresponds to a torque increase amount obtained by executing the minute amount injection in a case where the fuel injection valve 4 is not aged and at the same time the fuel pressure PF is the predetermined value PFREF in the map shown in FIG. 9, and is empirically obtained.

Therefore, if the fuel injection valve 4 is not aged and at the same time the fuel pressure PF is the predetermined value PFREF, the torque increase amount DTRQ is substantially equal to the predetermined increase amount DTRQ0. Also, as described above, if the fuel injection valve 4 is aged, the actual fuel injection amount becomes smaller than that of a new fuel injection valve that is not aged. For this reason, the torque increase amount DTRQ becomes smaller than the predetermined increase amount DTRQ0 with respect to the same fuel pressure PF.

On the other hand, as the fuel pressure PF is lower than the predetermined value PFREF, the degree of atomization thereof becomes lower, so that the fuel injected by the minute amount injection becomes more difficult to combust. For this reason, even when the fuel injection valve 4 is new, the actual torque increase amount DTRQ calculated in the step 75 becomes smaller than the predetermined increase amount DTRQ0 set based on the predetermined value PFREF as mentioned above. Further, as the fuel pressure PF becomes higher than the predetermined value PFREF, the degree of attachment of the fuel injected by the minute amount injection to a wall surface becomes higher, so that the amount of fuel that actually combusts becomes smaller. For this reason, even when the fuel injection valve 4 is new, the actual torque increase amount DTRQ becomes smaller than the predetermined increase amount DTRQ0.

On the other hand, as described above, the fuel pressure correction coefficient CORPF by which the torque increase amount DTRQ calculated in the step 75 is multiplied for correction is set to 1.0 where the fuel pressure PF = the predetermined value PFREF holds, to a larger value as the fuel pressure PF is lower within a range where the fuel pressure PF < the predetermined value PFREF holds, and to a larger value as the fuel pressure PF is higher within a range where the fuel pressure PF > the predetermined value PFREF holds. This makes it possible to properly perform the determination as to whether or not the fuel injection valve 4 is aged, by using the predetermined increase amount DTRQ0 in the step 79 while compensating for the above-mentioned change in the torque increase amount DTRQ caused by the fuel pressure PF.

Further, the fuel injected by the minute amount injection is more difficult to combust as the intake temperature TA becomes lower. For this reason, even when the fuel injection valve 4 is new, the actual torque increase amount DTRQ calculated in the step 75 becomes smaller than the predetermined increase amount DTRQ0. However, as mentioned above, the intake temperature correction coefficient CORTA by which the torque increase amount DTRQ is multiplied for correction is set to a larger value as the intake temperature TA is lower. This makes it possible to properly perform the determination as to whether or not the fuel injection valve 4 is aged, by using the predetermined increase amount DTRQ0 in the step 79 while compensating for the above-mentioned change in the torque increase amount DTRQ caused by the intake temperature TA.

For the reasons stated above, if the answer to the question of the step 79 is negative (NO), it is judged that the fuel injection valve 4 is aged, and the minute command fuel injection amount QLCMD (n) is increased by a predetermined amount $\alpha$ (step 80), followed by terminating the present process. By executing the step 80, the amount of fuel injected by the minute amount injection increases, whereby the torque increase amount DTRQ increases. Incidentally, the initial value of the minute command fuel injection amount QLCMD (n) is set to a predetermined minute amount.

Then, if the answer to the question of the step 79 becomes affirmative (YES), i.e. if the torque increase amount DTRQ becomes equal to or more than the predetermined increase amount DTRQ0, a learned value QCLRN(n) that is associated with the learning target cylinder and the fuel pressure status S_CPF set in one of the steps 44 and 52 to 55 appearing in FIG. 5, i.e. the present target fuel pressure PFOBJ is read out from the learned values QCLRN (n) stored in association with the cylinders and the fuel pressure statuses S_CPF as described above (step 81).

Next, by using the minute command fuel injection amount QLCMD (n) used for the minute amount injection in the step 73 and the learned value QCLRN (n) read out in the step 81, a learned value deviation DQLRN(n) is calculated by the following equation (1) (step 82):

$$DQLRN(n) = QLCMD(n) - QCLRN(n) \quad \dots \quad (1)$$

It should be noted that the initial value of the learned value QCLRN(n) is set to the initial value of the minute command fuel injection amount QLCMD (n) that is not increased by the predetermined amount α by executing the above-described step 80. As is clear from this and the above-described relationship between the torque increase amount DTRQ and the predetermined increase amount DTRQ0, if the fuel injection valve 4 is new, immediately after the answer to the question of the step 72 becomes affirmative (YES), the answer to the question of the step 79 becomes affirmative (YES), and the minute command fuel injection amount QLCMD (n) and the learned value QCLRN (n) become equal to each other, whereby the learned value deviation DQLRN (n) calculated in the step 82 becomes equal to 0.

In a step 83 following the step 82, the learned value QCLRN(n) is calculated (updated) according to the learned value deviation DQLRN(n) calculated in the step 82. Therefore, if the fuel injection valve 4 is new, the learned value QCLRN (n) is held at the immediately preceding value, i.e. the initial value. On the other hand, if the fuel injection valve 4 is aged, the learned value deviation DQLRN (n) becomes a positive value, and as the learned value deviation DQLRN (n) is larger, the learned value QCLRN(n) is increased.

Next, the learned value QCLRN (n) updated in the step 83 is stored in the RAM in association with the cylinder and the fuel pressure status S_CPF (step 84). Next, when the calculation of the learned value QCLRN with respect to the present target fuel pressure PFOBJ is completed for all of the cylinders, the fuel pressure control flag F_ZFCPF is reset to 0 (step 85) in order to terminate the fuel pressure control for the minute amount injection using the present target fuel pressure PFOBJ.

Next, it is determined whether or not the calculation (update) of the learned value QCLRN is completed with respect to all of the first to fifth target fuel pressures PFOBJ1 to PFOBJ5 (step 86). If the answer to this question is negative (NO), the present process is immediately terminated, whereas if the answer is affirmative (YES), a learning completion flag F_ZFCEND is set to 1 in order to indicate that the calculation of the learned value QCLRN is completed (step 87), followed by terminating the present process.

As described above, in the fuel pressure control process and the learned value calculation process, the minute amount injection is executed with respect to each of the first to fifth target fuel pressures PFOBJ1 to PFOBJ5, and the learned value QCLRN(n) is calculated according to the torque increase amount DTRQ during execution of the minute amount injection.

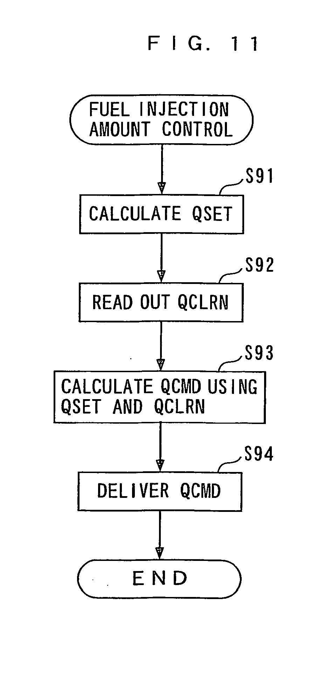

Further, the calculated learned values QCLRN(n) are used for fuel injection amount control by the fuel injection valves 4 as follows: FIG. 11 shows a fuel injection amount control process for controlling the fuel injection amount. The present process is executed for each cylinder in synchronization with generation of the TDC signal. It should be noted that in the following description, the suffix n is omitted. Further, a cylinder as a target of the present fuel injection amount control is referred to as the "control target cylinder".

First, in a step 91 in FIG. 11, a demanded fuel injection amount QSET is calculated by searching a predetermined map (not shown) according to the engine speed NE and a demanded torque. The demanded torque is calculated by searching a predetermined map (not shown) according to the engine speed NE and the accelerator pedal opening AP, in a demanded torque calculation process (not shown). Next, a learned value QCLRN that is associated with the present control target cylinder and the fuel pressure PF at the time is read out from the learned values QCLRN stored in association with the cylinders and the fuel pressure statuses S_CPF (step 92).

In the step 92, the reading of the learned value QCLRN corresponding to the fuel pressure PF is performed in the following manner: As is clear from the fuel pressure status S_CPF setting method and the learned value QCLRN learning method described above, the learned values QCLRN corresponding to the respective fuel pressure statuses S_CPF= 1 to 5 correspond to the respective first to fifth target fuel pressures PFOBJ1 to PFOBJ5. In the step 92, from these learned values QCLRN, a learned value QCLRN corresponding to one of the first to fifth target fuel pressures PFOBJ1 to PFOBJ5 that is equal to the fuel pressure PF at the time is read out. In this case, if the fuel pressure PF at the time does not match the first to fifth target fuel pressures PFOBJ1 to PFOBJ5, the learned value QCLRN is calculated by interpolation.

In a step 93 following the step 92, a command fuel injection amount QCMD is calculated by using the demanded fuel injection amount QSET calculated in the step 91 and the learned value QCLRN read out in the step 92. More specifically, the difference between the learned value QCLRN and the initial value thereof is calculated and the calculated deviation is added to the demanded fuel injection amount QSET, whereby the command fuel injection amount QCMD is calculated.

In this case, as is clear from the above-described learned value QCLRN calculation method, if the fuel injection valve 4 is new, the difference between the learned value QCLRN and the initial value thereof is equal to 0. As a result, the command fuel injection amount QCMD calculated as described above becomes equal to the demanded fuel injection amount QSET. On the other hand, if the fuel injection valve 4 is aged and the actual fuel injection amount is smaller than that of a new one, the difference between the learned value QCLRN and the initial value thereof becomes a positive value and equal to an amount of decrease in the fuel injection amount caused by aging of the fuel injection valve 4. As a result, the command fuel injection amount QCMD is calculated to a value obtained by adding the amount of decrease to the demanded fuel injection amount QSET, whereby it is corrected to a larger value than in the case of the fuel injection valve 4 being new.

In a step 94 following the above step 93, a control input based on the command fuel injection amount QCMD calculated in the step 93 is delivered to a fuel injection valve 4 associated with the control target cylinder, followed by terminating the present process. Thus, the actual fuel injection amount injected by the fuel injection valve 4 is made equal to the demanded fuel injection amount QSET irrespective of whether the fuel injection valve 4 is aged.

Further, correspondence between various types of elements in the present embodiment and various types of elements of the present invention (invention recited in claims) are as follows: The ECU 2 in the present embodiment corresponds to minute amount injection means, rotation change-detecting means, correction amount calculation means, and correction means in the present invention. Also, the fuel pressure sensor 31, the crank angle sensor 33, and the intake temperature sensor 36 in the present embodiment correspond to fuel injection pressure-detecting means, the rotation change-detecting means, and intake temperature-detecting means in the present invention, respectively.

Further, the minute command fuel injection amount QLCMD, the command fuel injection amount QCMD, and the learned value QCLRN in the present embodiment correspond to a predetermined minute amount, a control input, and a correction amount in the present invention, respectively. Also, the torque increase amount DTRQ, the fuel pressure PF, and the intake temperature TA in the present embodiment correspond to the detected change in rotation of the engine 3, the detected fuel injection pressure, and the detected intake temperature, in the present invention, respectively.

As described above, according to the present embodiment, the minute amount injection is executed during the F/C operation, and the torque increase amount DTRQ during execution of the minute amount injection is calculated. Further, the torque increase amount DTRQ is corrected according to the detected fuel pressure PF, the learned value QCLRN is calculated by using the corrected torque increase amount DTRQ, and the command fuel injection amount QCMD is corrected according to the calculated learned value QCLRN. Accordingly, it is possible to properly calculate the learned value QCLRN according to the fuel pressure PF while compensating for a change in the torque increase amount DTRQ (actual change in rotation of the engine 3) caused by the fuel pressure PF. Further, it is possible to properly correct the command fuel injection amount QCMD by using the learned value QCLRN thus properly calculated, and in turn control the fuel injection amount injected by the fuel injection valve 4 with high accuracy.

Further, as described above, when the torque increase amount DTRQ is below the predetermined increase amount DTRQ0, the minute command fuel injection amount QLCMD is increased until the former DTRQ becomes equal to the latter DTRQ0. Then, when the torque increase amount DTRQ becomes equal to the predetermined increase amount DTRQ0, the difference between the minute command fuel injection amount QLCMD at the time and the learned value QCLRN obtained at the time is calculated as the learned value deviation DQLRN, and the learned value QCLRN is updated in an increasing direction as the calculated learned value deviation DQLRN is larger. Further, by adding the difference between the learned value QCLRN and the initial value thereof to the demanded fuel injection amount QSET, the command fuel injection amount QCMD is corrected.

As is clear from the above description, the learned value QCLRN corrects the command fuel injection amount QCMD to a larger value as the torque increase amount DTRQ is smaller than the predetermined increase amount DTRQ0. On the other hand, as the detected intake temperature TA is lower, the intake temperature correction coefficient CORTA is calculated such that it becomes larger, and the torque increase amount DTRQ is corrected in an increasing direction by multiplying the same by the intake temperature correction coefficient CORTA. As a result, the learned value QCLRN is calculated such that as the intake temperature TA is lower, the command fuel injection amount QCMD corrected by the learned value QCLRN becomes smaller. Accordingly, it is possible to properly calculate the learned value QCLRN according to the intake temperature TA while compensating for a change in the torque increase amount DTRQ caused by the intake temperature TA, whereby it is possible to control the fuel injection amount with higher accuracy.

Further, since the minute amount injection is executed with respect to each of the first to fifth target fuel pressures PFOBJ1 to PFOBJ5, and the learned value QCLRN is calculated according to the torque increase amount DTRQ during execution of such minute amount injection, it is possible to properly calculate the learned value QCLRN for the entire range of the fuel pressure PF. Accordingly, it is possible to properly correct the command fuel injection amount QCMD by using the learned value QCLRN thus properly calculated for the entire range of the fuel pressure PF, and in turn control the fuel injection amount with high accuracy.

Further, the judgment temperature TJUD is calculated such that it becomes lower as the target fuel pressure PFOBJ used for the minute amount injection is higher, and when the detected fuel temperature TFUEL is higher than the calculated judgment temperature TJUD, the fuel pressure control for the minute amount injection using the target fuel pressure PFOBJ associated with the judgment temperature TJUD is inhibited. This makes it possible to avoid the situation where overheated fuel flows into the first return hose 8 as the fuel pressure control for the minute amount injection is executed, thereby making it possible to prolong the service life of the fuel injection control system 1.

Further, during the F/C operation, even if the fuel pressure control for the minute amount injection using the target fuel pressure PFOBJ is inhibited once, it is sequentially determined, as described above, for a lower one of the first to fifth target fuel pressures PFOBJ1 to PFOBJ5, whether or not the fuel pressure control for the minute amount injection based on the judgment temperature TJUD is executable, and the fuel pressure control for the minute amount injection is executed by using the target fuel pressure PFOBJ for which the execution of the fuel pressure control is permitted. Accordingly, it is possible to increase frequency of execution of the calculation of the learned value QCLRN and prolong the service life of the fuel injection control system 1.

It should be noted that the present invention is by no means limited to the embodiment described above, but it can be practiced in various forms. For example, although in the above-described embodiment, the fuel injection valves 4 that inject fuel into the respective cylinders are used, a fuel injection valve that injects fuel into an intake port may be used. Further, although in the above-described embodiment, the change in rotation of the engine in the present invention is the torque increase amount DTRQ, it may be an amount of change in the rotational speed of the crank shaft.

Further, insofar as the change in rotation of the engine and the fuel injection pressure are used, the learned value QCLRN may be calculated by an appropriate calculation method other than that described for the embodiment. For example, as described hereinabove, if the fuel injection valve 4 is aged, the torque increase amount DTRQ is smaller than the predetermined increase amount DTRQ0 with respect to the same fuel pressure PF. For this reason, instead of calculating the learned value QCLRN according to a result of comparison between the torque increase amount DTRQ corrected using the fuel pressure PF and the predetermined increase amount DTRQ0 a in the above-described embodiment, the predetermined increase amount DTRQ0 may be corrected according to the fuel pressure PF, and the learned value QCLRN may be calculated according to a result of comparison between the corrected predetermined increase amount DTRQ0 and the torque increase amount DTRQ calculated in the step 75. Alternatively, the learned value QCLRN may be calculated without correcting the torque increase amount DTRQ and predetermined increase amount DTRQ0 by using the fuel pressure PF, and the learned value QCLRN thus calculated may be corrected according to the fuel pressure PF.

The above also similarly applies to the correction of the torque increase amount DTRQ according to the intake temperature TA. That is, the predetermined increase amount DTRQ0 may be corrected according to the intake temperature TA, and the learned value QCLRN may be calculated according to a result of comparison between the corrected predetermined increase amount DTRQ0 and the torque increase amount DTRQ calculated in the step 75. Alternatively, the learned value QCLRN may be calculated without correcting the torque increase amount DTRQ and the predetermined increase amount DTRQ0 by using the intake temperature TA, and the learned value QCLRN thus calculated may be corrected according to the intake temperature TA.

In addition, the learned value QCLRN may be calculated by replacing the learned value deviation DQLRN with a parameter described below. As described above, the relationship between the torque increase amount DTRQ and the predetermined increase amount DTRQ0, i.e. the difference or ratio between the torque increase amount DTRQ and the predetermined increase amount DTRQ0, which is a discrepancy degree parameter representative of a degree of discrepancy of the torque increase amount DTRQ from the predetermined increase amount DTRQ0, represents a change in the fuel injection amount caused by aging of the fuel injection valve 4. Therefore, the learned value QCLRN may be calculated by searching a map according to such a discrepancy degree parameter or by computation according to the discrepancy degree parameter.

Further, although in the above-described embodiment, the fuel pressure control for the minute amount injection and the calculation of the learned value QCLRN are executed for each of the first to fifth target fuel pressures PFOBJ1 to PFOBJ5, the fuel pressure control for the minute amount injection and the calculation of the learned value QCLRN may be executed with respect to a predetermined single fuel pressure. Further, although in the above-described embodiment, the correction of the control input by the learned value QCLRN is performed via the command fuel injection amount QCMD, the correction may be performed directly on the control input. Further, although the above-described embodiment is an example of application of the present invention to the engine 3 that is a four-cylinder diesel engine for automotive vehicles, the present invention can be applied to various types of industrial internal combustion engines, such as gasoline engines, CNG (Compressed Natural Gas) engines, and engines for ship propulsion machines, such as an outboard motor having a vertically-disposed crankshaft. Further, the number of cylinders is not limited to four, but may be one or any plural number other than four.

It is further understood by those skilled in the art that the foregoing are preferred embodiments of the invention, and that various changes and modifications may be made without departing from the spirit and scope thereof.

A fuel injection control system for an internal combustion engine, which is capable of properly calculating a correction amount according to a fuel injection pressure, thereby enabling accurate control of a fuel injection amount.

The system executes a minute amount injection that injects a predetermined minute amount of fuel from a fuel injection valve during a fuel cut operation that interrupts fuel injection for obtaining output of the engine, detects a change in engine rotation during the execution of the minute amount injection, detects a pressure of fuel injected from the fuel injection valve as the fuel injection pressure, calculates the correction amount for correcting a control input for controlling the fuel injection amount injected from the fuel injection valve using the detected change in engine rotation and the detected fuel injection pressure, and corrects the control input according to the calculated correction amount.

**Claims**

1. A fuel injection control system (1) for an internal combustion engine (3), including a fuel injection valve (4) for injecting fuel that combusts in a combustion chamber of the engine (3), and fuel injection pressure-detecting means (31) for detecting a pressure of fuel injected from the fuel injection valve (4) as a fuel injection pressure (PF), the fuel injection control system (1) comprising:

   minute amount injection means (2) for executing minute amount injection (S73) that injects a predetermined minute amount of fuel from the fuel injection valve (4) during a fuel cut (F/C) operation that interrupts injection of fuel for obtaining output of the engine (3);
   rotation change-detecting means (33) for detecting a change in rotation (S75) of the engine (3) during execution of the minute amount injection (S73);
   correction amount calculation means (2) for calculating a correction amount (QCLRN) for correcting a control input for controlling a fuel injection amount of fuel injected from the fuel injection valve (4) by using the detected change in rotation (DTRQ) of the engine (3) and the detected fuel injection pressure (PF); and
   correction means (2) for correcting the control input according to the calculated correction amount (QCLRN),
   **characterized in that**
   the fuel injection control system (1) further comprises intake temperature-detecting means (36) for detecting a temperature of intake air drawn into the engine (3) as an intake temperature (TA), and
   wherein said correction amount calculation means (2) calculates the correction amount (QCLRN) such that as the detected intake temperature (TA) is lower, the fuel injection amount based on the control input corrected by the correction amount (QCLRN) becomes smaller,
   the fuel injection control system (1) further comprising fuel temperature-detecting means for detecting a fuel temperature (TFUEL), target fuel pressure-setting means for setting a target fuel pressure (PFOBJ) serving as a target of the fuel pressure, and determining means for determining whether or not the fuel pressure control for the minute amount injection using the target fuel pressure (PFOBJ) is executable based on a relationship between the target fuel pressure (PFOBJ) and the fuel temperature (TFUEL).

2. A control method for a fuel injection control system (1) for an internal combustion engine (3), including a fuel injection valve (4) for injecting fuel that combusts in a combustion chamber of the engine (3), and fuel injection pressure-detecting means (31) for detecting a pressure of fuel injected from the fuel injection valve (4) as a fuel injection pressure (PF),
   the control method comprising the steps of:

   executing minute amount injection (S73) that injects a predetermined minute amount of fuel from the fuel injection valve (4) during a fuel cut (F/C) operation that interrupts injection of fuel for obtaining output of the engine (3);
   detecting a change in rotation (S75) of the engine (3) during execution of the minute amount injection (S73);
   calculating (S82, S83) a correction amount (QCLRN) for correcting a control input for controlling a fuel injection amount of fuel injected from the fuel injection valve (4) by using the detected change in rotation (DTRQ) of the engine (3) and the detected fuel.injection pressure (PF); and
   correcting the control input according to the calculated correction amount (QCLRN),
   **characterized in that**
   the control method further comprises detecting a temperature of intake air drawn into the engine (3) as an intake temperature (TA), and
   wherein said calculating of the correction amount (QCLRN) includes calculating the correction amount (QCLRN) such that as the detected intake temperature (TA) is lower, the fuel injection amount based on the control input corrected by the correction amount (QCLRN) becomes smaller,
   the control method further comprising detecting a fuel temperature (TFUEL), setting a target fuel pressure (PFOBJ) serving as a target of the fuel pressure, and determining whether or not the fuel pressure control for the minute amount injection using the target fuel pressure (PFOBJ) is executable based on a relationship between the target fuel pressure (PFOBJ) and the fuel temperature (TFUEL).

**Patentansprüche**

1. Kraftstoffeinspritzregelungs-i-steuerungssystem (1) für einen Verbrennungsmotor (3), umfassend:

   ein Kraftstoffeinspritzventil (4) zum Einspritzen von Kraftstoff, welcher in einer Brennkammer des Motors (3) verbrennt, und Kraftstoffeinspritzdruck-Detektionsmittel (31) zum Detektieren eines Drucks eines Kraftstoffs, welcher von dem Kraftstoffeinspritzventil (4) eingespritzt wird, als einen Kraftstoffeinspritzdruck (PF), wobei das Kraftstoffeinspritzregelungs-/-steuerungssystem (1) umfasst:

   Kleinmengeneinspritzmittel (2) zum Ausführen einer Kleinmengeneinspritzung (S73), welche eine vorgegebene Kraftstoffkleinmenge von dem Kraftstoffeinspritzventil (4) während eines Kraftstoffabschaltbetriebs (F/C), welcher eine Kraftstoffeinspritzung zum Erhalten einer Ausgabe des Motors (3) unterbricht, einspritzt; Rotationsänderung-Detektionsmittel (33) zum Detektieren einer Rotationsänderung (S75) des Motors (3) während eines Ausführens der Kleinmengeneinspritzung (S73); Korreturbetrag-Berechnungsmittel (2) zum Berechnen eines Korrekturbetrags (QCLRN) zum Korrigieren einer Regelungs-/Steuerungseingabe zum Regeln/Steuern einer Kraftstoffeinspritzmenge eines von dem Kraftstoffeinspritzventil (4) eingespritzten Kraftstoffs unter Verwendung der detektierten Rotationsänderung (DTRQ) des Motors (3) und des detektierten Kraftstoffeinspritzdrucks (PF); und Korrekturmittel (2) zum Korrigieren der Regelungs-/Steuerungseingabe gemäß dem berechneten Korrekturbetrag (QCLRN),

   **dadurch gekennzeichnet, dass** das Kraftstoffeinspritzregelungs-/- steuerungssystem (1) ferner Ansaugtemperatur-Detektionsmittel (36) umfasst zum Detektieren einer Temperatur von in den Motor (3) angesaugter Ansaugluft als eine Ansaugtemperatur (TA), und wobei die Korrekturbetrag-Berechnungsmittel (2) den Korrekturbetrag (QCLRN) derart berechnen, dass mit abnehmender detektierter Ansaugtemperatur (TA) die Kraftstoffeinspritzmenge basierend auf der durch den Korrekturbetrag (QCLRN) korrigierten Regelungs-/Steuerungseingabe abnimmt, wobei das Kraftstoffeinspritzregelungs-/-steuerungssystem (1) ferner Kraftstofftemperatur-Detektionsmittel zum Detektieren einer Kraftstofftemperatur (TFUEL), Zielkraftstoffdruck-Einstellmittel zum Einstellen eines Zielkraftstoffdrucks (PFOBJ), welcher als ein Zielkraftstoffdruck dient, und Bestimmungsmittel umfasst, zum Bestimmen, ob die Kraftstoffdruckregelung/-steuerung für die Kleinmengeneinspritzung unter Verwendung des Zielkraftstoffdrucks (PFOBJ) basierend auf einer Beziehung zwischen dem Zielkraftstoffdruck (PFOBJ) und der Kraftstofftemperatur (TFUEL) ausführbar ist oder nicht.

2. Regelungs-/Steuerungsverfahren für ein Kraftstoffeinspritzregelungs-/- steuerungssystem (1) für einen Verbrennungsmotor (3), umfassend:

   ein Kraftstoffeinspritzventil (4) zum Einspritzen von Kraftstoff, welcher in einer Brennkammer des Motors (3) verbrennt, und Kraftstoffeinspritzdruck-Detektionsmittel (31) zum Detektieren eines Drucks eines Kraftstoffs, welcher von dem Kraftstoffeinspritzventil (4) eingespritzt wird, als einen Kraftstoffeinspritzdruck (PF), wobei das Regelungs-/Steuerungsverfahren die Schritte umfasst:

   Ausführen einer Kleinmengeneinspritzung (S73), welche eine vorgegebene Kraftstoffkleinmenge von dem Kraftstoffeinspritzventil (4) während eines Kraftstoffabschaltbetriebs (F/C), welcher eine Kraftstoffeinspritzung zum Erhalten einer Ausgabe des Motors (3) unterbricht, einspritzt; Detektieren einer Rotationsänderung (S75) des Motors (3) während eines Ausführens der Kleinmengeneinspritzung (S73); Berechnen (S82, S83) eines Korrekturbetrags (QCLRN) zum Korrigieren einer Regelungs-/Steuerungseingabe zum Regeln/Steuern einer Kraftstoffeinspritzmenge eines von dem Kraftstoffeinspritzventil (4) eingespritzten Kraftstoffs unter Verwendung der detektierten Rotationsänderung (DTRQ) des Motors (3) und des detektierten Kraftstoffeinspritzdrucks (PF); und Korrigieren der Regelungs-/Steuerungseingabe gemäß dem berechneten Korrekturbetrag (QCLRN),

   **dadurch gekennzeichnet, dass**
   das Regelungs-/Steuerungsverfahren ferner ein Detektieren einer Temperatur von in den Motor (3) angesaugter Ansaugluft als eine Ansaugtemperatur (TA) umfasst, und
wobei das Berechnen des Korrekturbetrags (QCLRN) ein Berechnen des Korrekturbetrags (QCLRN) derart umfasst, dass mit abnehmender detektierter Ansaugtemperatur (TA) die Kraftstoffeinspritzmenge basierend auf der durch den Korrekturbetrag (QCLRN) korrigierten Regelungs-/Steuerungseingabe abnimmt,
wobei das Regelungs-/Steuerungsverfahren ferner ein Detektieren einer Kraftstofftemperatur (TFUEL), ein Einstellen eines Zielkraftstoffdrucks (PFOBJ), welcher als ein Zielkraftstoffdruck dient, und ein Bestimmen umfasst, ob die Kraftstoffdruckregelung/-steuerung für die Kleinmengeneinspritzung unter Verwendung des Zielkraftstoffdrucks (PFOBJ) basierend auf einer Beziehung zwischen dem Zielkraftstoffdruck (PFOBJ) und der Kraftstofftemperatur (TFUEL) ausführbar ist oder nicht.

**Revendications**

1. Système de commande d'injection de carburant (1) pour un moteur à combustion interne (3), comprenant une soupape d'injection de carburant (4) pour injecter du carburant qui brûle dans une chambre de combustion du moteur (3), et un moyen de détection de pression d'injection de carburant (31) pour détecter une pression du carburant injecté par la soupape d'injection de carburant (4) en tant que pression d'injection de carburant (PF),
le système de commande d'injection de carburant (1) comprenant :

un moyen d'injection de quantité infime (2) pour exécuter une injection de quantité infime (S73) qui injecte une quantité infime prédéterminée de carburant depuis la soupape d'injection de carburant (4) pendant une opération de coupure de carburant (F/C) qui interrompt l'injection du carburant pour obtenir une sortie du moteur (3) ;
un moyen de détection de changement de rotation (33) pour détecter un changement de rotation (S75) du moteur (3) pendant l'exécution de l'injection de quantité infime (S73) ;
un moyen de calcul de quantité de correction (2) pour calculer une quantité de correction (QCLRN) pour corriger une entrée de commande pour commander une quantité d'injection de carburant de carburant injecté par la soupape d'injection de carburant (4) en utilisant le changement de rotation détecté (DTRQ) du moteur (3) et la pression d'injection de carburant détectée (PF) ; et
un moyen de correction (2) pour corriger l'entrée de commande selon la quantité de correction calculée (QCLRN),
**caractérisé en ce que**
le système de commande d'injection de carburant (1) comprend en outre un moyen de détection de température d'admission (36) pour détecter une température d'air d'admission aspiré dans le moteur (3) en tant que température d'admission (TA), et
dans lequel ledit moyen de calcul de quantité de correction (2) calcule la quantité de correction (QCLRN) de sorte que lorsque la température d'admission détectée (TA) est inférieure, la quantité d'injection de carburant basée sur l'entrée de commande corrigée par la quantité de correction (QCLRN) devient plus petite,
le système de commande d'injection de carburant (1) comprenant en outre un moyen de détection de température de carburant pour détecter une température de carburant (TFUEL), un moyen d'établissement de pression de carburant cible pour établir une pression de carburant cible (PFOBJ) servant de cible de la pression de carburant, et un moyen de détermination pour déterminer si la commande de pression de carburant pour l'injection de quantité infime utilisant la pression de carburant cible (PFOBJ) est exécutable ou non en se basant sur une relation entre la pression de carburant cible (PFOBJ) et la température de carburant (TFUEL).

2. Procédé de commande pour un système de commande d'injection de carburant (1) pour un moteur à combustion interne (3), comprenant une soupape d'injection de carburant (4) pour injecter du carburant qui brûle dans une chambre de combustion du moteur (3), et un moyen de détection de pression d'injection de carburant (31) pour détecter une pression du carburant injecté par la soupape d'injection de carburant (4) en tant que pression d'injection de carburant (PF),
le procédé de commande comprenant les étapes :

d'exécution d'une injection de quantité infime (S73) qui injecte une quantité infime prédéterminée de carburant depuis la soupape d'injection de carburant (4) pendant une opération de coupure de carburant (F/C) qui interrompt l'injection du carburant pour obtenir une sortie du moteur (3) ;
de détection d'un changement de rotation (S75) du moteur (3) pendant l'exécution de l'injection de quantité infime (S73) ;
de calcul (S82, S83) d'une quantité de correction (QCLRN) pour corriger une entrée de commande pour commander une quantité d'injection de carburant de carburant injecté par la soupape d'injection de carburant (4) en utilisant le changement de rotation détecté (DTRQ) du moteur (3) et la pression d'injection de carburant détectée (PF) ; et

de correction de l'entrée de commande selon la quantité de correction calculée (QCLRN),

**caractérisé en ce que**

le procédé de commande comprend en outre la détection d'une température d'air d'admission aspiré dans le moteur (3) en tant que température d'admission (TA), et

dans lequel ledit calcul de quantité de correction (QCLRN) comprend le calcul de la quantité de correction (QCLRN) de telle sorte que lorsque la température d'admission détectée (TA) est inférieure, la quantité d'injection de carburant basée sur l'entrée de commande corrigée par la quantité de correction (QCLRN) devient plus petite, le procédé de commande comprenant en outre la détection d'une température de carburant (TFUEL), l'établissement d'une pression de carburant cible (PFOBJ) servant de cible de la pression de carburant, et la détermination permettant de savoir si la commande de pression de carburant pour l'injection de quantité infime utilisant la pression de carburant cible (PFOBJ) est exécutable ou non en se basant sur une relation entre la pression de carburant cible (PFOBJ) et la température de carburant (TFUEL).

F I G . 1

EP 2 278 143 B1

EP 2 278 143 B1

F I G. 3

PRECONDITION
DETERMINATION

S1
FAILURE OCCURRED ? ───YES────────────────────┐
│NO
│ S2
TA>TA0 ? ───NO──────────────────────▷
│YES
│ S3
TFLL≦TFUEL≦TFLH ? ───NO────────▷
│YES
│ S4
TW>TW0 ? ───NO──────────────────────▷
│YES
│ S5
NELL≦NE≦NELH ? ───NO────────────▷
│YES
│ S6
PBA>PBA0 ? ───NO────────────────▷
│YES
│ S7
VP>VP0 ? ───NO──────────────────────▷
│YES
│ S8
TCYLE>TCYLO ? ───NO────────────▷
│YES
│ S9
F_ZFCLRN=1 ? ───NO──────────────▷
│YES
│ S10
F_ACON=1 ? ───YES──────────────▷
│NO
│ S11
F_CLON=1 ? ───NO────────────────▷
│YES
│ S12
F_GROK=1 ? ───NO────────────────▷
│YES

S13 | S14
F_ZFCPRECON ← 1 | F_ZFCPRECON ← 0

END

F I G.  4

```
         ┌─────────────────────────┐
         │  EXECUTION CONDITION    │
         │  DETERMINATION          │
         └─────────────────────────┘
                     │
                     ▼                    S21
             ╱─────────────────╲          NO
            ╱   AP < APTH ?     ╲──────────────────────┐
            ╲                   ╱                       │
             ╲─────────────────╱                        │
                     │ YES                               │
                     ▼                    S23            │
             ╱─────────────────╲          NO             │
            ╱    F_FC = 1 ?     ╲────────────────►       │
            ╲                   ╱                        │
             ╲─────────────────╱                         │
                     │ YES                               │
                     ▼                    S24            │
             ╱─────────────────╲          NO             │
            ╱  TMFC ELAPSED ?   ╲────────────────►       │
            ╲                   ╱                        │
             ╲─────────────────╱                         │
                     │ YES                               │
                     ▼                    S25            │
         ┌─┬─────────────────────────┬─┐                │
         │ │  FUEL PRESSURE CONTROL  │ │                │
         └─┴─────────────────────────┴─┘                │
                     │                                   │
                     ▼                    S26            │
             ╱─────────────────╲          NO             │
            ╱  F_ZFCPF = 1 ?    ╲────────────────►       │
            ╲                   ╱                        │
             ╲─────────────────╱                         │
                     │ YES                               │
                     ▼                    S27            │
             ╱─────────────────╲          NO             │
            ╱    F_PF = 1 ?     ╲────────────────►       │
            ╲                   ╱                        │
             ╲─────────────────╱                         │
                     │ YES                               │
                     ▼                    S28            │
             ╱─────────────────╲          NO             │
            ╱  TMPF ELAPSED ?   ╲────────────────►       │
            ╲                   ╱                        │
             ╲─────────────────╱                         │
                     │ YES                               │
                     ▼           S29              S22    │
         ┌──────────────────┐        ┌──────────────────┐
         │  F_ZFCCON ← 1    │        │  F_ZFCCON ← 0    │
         └──────────────────┘        └──────────────────┘
                     │                        │
                     ◄────────────────────────┘
                     ▼
              ┌──────────────┐
              │    END       │
              └──────────────┘
```

FIG. 5

F I G. 6

F I G. 7

```
      ┌─────────────────┐
      │  LEARNED VALUE  │
      │  CALCULATION    │
      └─────────────────┘
               │
               ▽          ╱S71
      ╱─────────────────╲   NO
     ⟨  F_ZFCPRECON=1 ? ⟩────────────────────────┐
      ╲─────────────────╱                         │
               │ YES                              │
               ▽          ╱S72                    │
      ╱─────────────────╲   NO                    │
     ⟨   F_ZFCCON=1 ?   ⟩──────────────────┐      │
      ╲─────────────────╱                  │      │
               │ YES                       │      │
               ▽          ╱S73             │      │
      ┌─────────────────┐                  │      │
      │ EXECUTE MINUTE  │                  │      │
      │ AMOUNT INJECTION│                  │      │
      └─────────────────┘                  │      │
               │                           │      │
               ▽          ╱S74             │      │
      ┌─────────────────┐                  │      │
      │  CALCULATE DOMG │                  │      │
      └─────────────────┘                  │      │
               │                           │      │
               ▽          ╱S75             │      │
      ┌─────────────────┐                  │      │
      │  CALCULATE DTRQ │                  │      │
      └─────────────────┘                  │      │
               │                           │      │
               ▽          ╱S76             │      │
      ┌─────────────────┐                  │      │
      │ CALCULATE CORPF │                  │      │
      │ ACCORDING TO PF │                  │      │
      └─────────────────┘                  │      │
               │                           │      │
               ▽          ╱S77             │      │
      ┌─────────────────┐                  │      │
      │ CALCULATE CORTA │                  │      │
      │ ACCORDING TO TA │                  │      │
      └─────────────────┘                  │      │
               │                           │      │
               ▽          ╱S78             │      │
      ┌─────────────────┐                  │      │
      │ CORRECT DTRQ USING│                │      │
      │ CORPF AND CORTA │                  │      │
      └─────────────────┘                  │      │
               │                           ▽      ▽
               ▽                         ┌───┐  ┌───┐
             ┌───┐                       │ A │  │ A │
             │ B │                       └───┘  └───┘
             └───┘
```

23

F I G.  8

(B)

S79
⟨ DTRQ≧DTRQ0 ? ⟩ —NO

YES

S81
READ OUT QCLRN(n)

S82
DQLRN(n)←
QLCMD(n)−QCLRN(n)

S83
UPDATE QCLRN(n)
ACCORDING TO DQLRN(n)

S84
STORE QCLRN(n)

S85
F_ZFCPF←0

S86
⟨ UPDATE OF QCLRN COMPLETED ? ⟩—NO

YES

S87
F_ZFCEND←1

S80
QLCMD(n)←
QLCMD(n)+α

(A)

E N D

F I G. 9

F I G. 1 0

F I G. 1 1

```
┌─────────────────────┐
│   FUEL INJECTION     │
│   AMOUNT CONTROL     │
└─────────────────────┘
           │
           ▼                    S91
┌─────────────────────┐
│   CALCULATE QSET     │
└─────────────────────┘
           │
           ▼                    S92
┌─────────────────────┐
│   READ OUT QCLRN     │
└─────────────────────┘
           │
           ▼                    S93
┌─────────────────────┐
│ CALCULATE QCMD USING │
│ QSET AND QCLRN       │
└─────────────────────┘
           │
           ▼                    S94
┌─────────────────────┐
│   DELIVER QCMD       │
└─────────────────────┘
           │
           ▼
┌─────────────────────┐
│       E N D         │
└─────────────────────┘
```

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2003317 A2
- JP 2005036788 A

- US 2005009203 A